# EUROPEAN PATENT APPLICATION

(11) **EP 4 832 427 A1**
(43) Date of publication of application: **28.10.2026**
(21) Application number: 26174024.5
(22) Date of filing: 22.04.2026
(51) Int. Cl.: H04L 25/03

(54) **RECEIVER USING HIGH SPEED SERIAL INTERFACE AND METHOD OFCONTROLLING THE SAME**

(30) Priority: 24.04.2025 KR 20250053891
(71) Applicant: LX Semicon Co., Ltd., Daejeon 34027 (KR)
(72) Inventor: KIM, Sang Ho, 34027 Daejeon (KR); KIM, Huiin, 34027 Daejeon (KR); YOO, Jae Wook, 34027 Daejeon (KR)
(74) Representative: Goddar, Heinz J.

(57) **Abstract**

A method of controlling a receiver using a high speed serial interface according to an embodiment of the present disclosure includes receiving input data from a transmitter via at least one channel, equalizing the received input data, restoring the equalized input data, adjusting an equalization (EQ) gain value of the restored input data, and equalizing the input data depending on the adjusted EQ gain value.

## Description

### CROSS-REFERENCE TO RELATED APPLICATIONS

This application claims the benefit of the Korean Patent Application No. 10-2025-0053891 filed on April 24, 2025, which is hereby incorporated by reference as if fully set forth herein.

### BACKGROUND

### Field of the Invention

The present disclosure relates to an equalizer or the like used in a high speed serial interface.

Here, the high speed serial interface corresponds to, for example, Peripheral Component Interconnect Express (PCIe), USB4, HDMI, DDR, etc., but the present disclosure is not necessarily limited thereto.

### Discussion of the Related Art

In a high speed serial interface, an adaptive equalizer (EQ) is a technology used to maintain signal integrity and optimize signal quality.

In the high speed serial interface, problems such as signal attenuation, reflection, and mutual interference may occur due to channel characteristics. To address these problems, an EQ is used. The EQ may serve to restore lost signals by adjusting frequency components of the signals.

Meanwhile, there are various types of algorithms that may be used for the adaptive EQ, and a least mean squares (LMS) adaptive EQ, a recursive least squares (RLS) adaptive EQ, etc., are mainly used.

For example, the LMS algorithm updates filter coefficients using gradient descent to minimize an error between the input signal and the desired output signal.

On the other hand, the RLS algorithm converges faster than the LMS algorithm and is designed to enable immediate adaptation to the input signal. The RLS algorithm is a method of updating the filter coefficients by considering both the previous input signal and the error and finds optimal coefficients by repeatedly calculating Least Squares Method.

However, according to the related art, when an analog circuit for processing the above-described LMS algorithm or an analog circuit for processing the RLS algorithm was added to implement the adaptive EQ, there was a problem in that the characteristics of the equalizer were degraded due to an increase in additional parasitic components.

### SUMMARY

One embodiment of the present disclosure is to improve the performance of an adaptive equalizer (EQ) by solving the problems of the related art described above.

Accordingly, according to an aspect of the present disclosure, a method of controlling a receiver using a high speed serial interface according to an embodiment of the present disclosure includes receiving input data from a transmitter via at least one channel, equalizing the received input data, restoring the equalized input data, adjusting an equalization (EQ) gain value of the restored input data, and equalizing the input data depending on the adjusted EQ gain value.

The adjusting may further include, for example, checking the number of errors corresponding to a current EQ gain value of the restored input data.

The adjusting may further include storing the current EQ gain value and the corresponding number of errors in a memory.

The adjusting may further include, for example, comparing the number of errors corresponding to a previous EQ gain value pre-stored in the memory with the number of errors corresponding to the current EQ gain value (the current EQ gain value is greater than the previous EQ gain value); and determining whether the number of errors increases or decreases as a result of the comparison.

The method may further include controlling equalization of the input data using an EQ gain value smaller than the current EQ gain value when it is determined that the number of errors increases based on a result of the determination.

The method may further include controlling the equalization of the input data using an EQ gain value greater than the current EQ gain value when the number of errors decreases based on the result of the determination.

According to another aspect of the present disclosure, a receiver using a high speed serial interface includes an equalization unit configured to receive input data via at least one channel from a transmitter and equalize the received input data, a restoration unit configured to restore the equalized input data, and a controller configured to adjust an equalization (EQ) gain value of the restored input data.

For example, the equalization unit may equalize the input data depending on the EQ gain value received from the controller.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a block diagram of an adaptive equalizer (EQ) according to the related art;
FIG. 2 is a block diagram of the adaptive EQ according to an embodiment of the present disclosure;
FIG. 3 is a block diagram illustrating a digital logic block shown in FIG. 2 in more detail;
FIG. 4 is a flowchart illustrating a method of controlling a device according to an embodiment of the present disclosure;
FIG. 5 is a flowchart illustrating the flowchart illustrated in FIG. 4 in more detail;
FIG. 6 is a diagram illustrating an example of data stored in a memory of the device according to an embodiment of the present disclosure; and
FIG. 7 is a diagram illustrating another example of the data stored in the memory of the device according to an embodiment of the present disclosure.

### DETAILED DESCRIPTION OF THE DISCLOSURE

The same reference numerals refer to substantially the same constituent elements throughout the specification. In the following description, detailed descriptions of configurations and functions that are well known in the technical field of the present disclosure and that are not directly related to the core features of the present disclosure may be omitted. The meanings of the terms described in the present specification should be understood as follows.

Advantages and features of the present disclosure and methods to achieve them will be elucidated from embodiments described below in detail with reference to the accompanying drawings. However, the present disclosure is not limited to embodiments disclosed below but will be implemented in various forms. The embodiments make the disclosure of the present invention complete and are provided so that those skilled in the art can easily understand the scope of the present disclosure. Therefore, the present disclosure will be defined by the scope of the appended claims.

Shapes, sizes, ratios, angles, numbers, etc., disclosed in the drawings for describing embodiments of the present disclosure are exemplary, and the present disclosure is not limited to the illustrated matters. Throughout the specification, like reference numerals denote like components. Further, when it is determined that detailed description of known art related to the present disclosure may obscure the gist of the present disclosure, the detailed description thereof will be omitted.

Where terms such as "includes," "has," or "is composed of" described in the present specification are used, other parts may be added unless "only" is used. When a component is expressed in the singular, it may include a case in which the plural is included unless otherwise explicitly stated.

When interpreting a component, it is interpreted as including the error range even if there is no separate explicit description.

In the case of describing a positional relationship, for example, where the positional relationship between two parts is described using terms such as "on," "upper portion," "lower portion," or "next to," one or more other parts may be located between the two parts unless "immediately" or "directly" is used.

When describing a temporal relationship, for example, when the temporal continuity is described as "after," "following," "then," "before," etc., it may also include cases where it is not continuous, unless "right away" or "directly" is used.

Although "first," "second," and the like are used to describe various components, these components are not limited by these terms. These terms are used only to distinguish one component from other components. Therefore, a first component described below may be a second component within the technical scope of the present disclosure.

The term "at least one" should be understood to include all combinations that may be presented from one or more related items. For example, the meaning of "at least one of a first item, a second item, and a third item" may refer not only to each of the first item, the second item, or the third item, but also to any combination of items that may be presented from two or more of the first item, the second item, and the third item.

The features of the various embodiments of the present disclosure may be combined with each other, in whole or in part, and may be variously interrelated and operated in a technical manner. Each embodiment may be implemented independently or in combination with other embodiments.

Hereinafter, embodiments of the present specification will be described in detail with reference to the accompanying drawings.

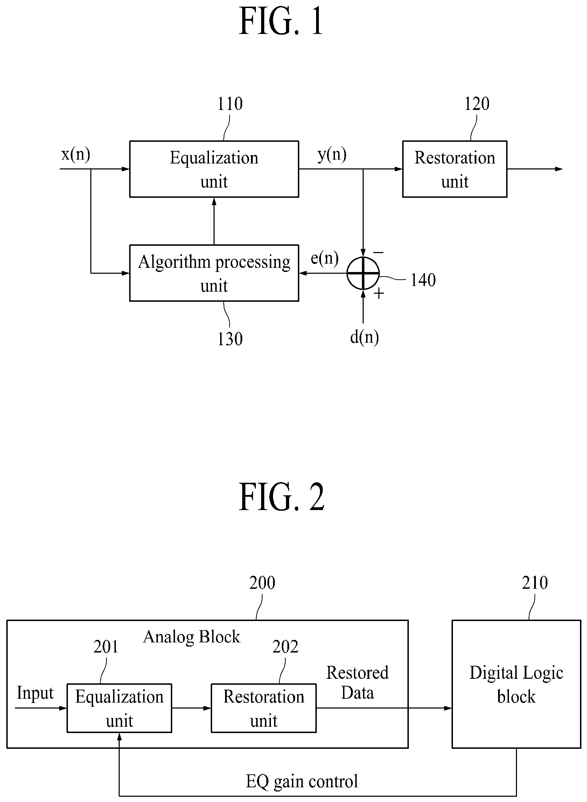

In FIG. 1, x(n) denotes an input signal, y(n) denotes the corresponding output signal, d(n) denotes an additional input signal for an adaptive equalizer (EQ), and e(n) denotes an error signal representing a difference between d(n) and y(n).

A representative difference between least mean squares (LMS) and recursive least squares (RLS) lies in how e(n) is found.

The RLS corresponds to, for example, an adaptive filter algorithm that recursively finds coefficients that minimize a weighted linear least squares cost function associated with an input signal.

On the other hand, the LMS corresponds to, for example, an algorithm that finds coefficients that minimize a mean squared error.

By confirming the e(n) and changing a gain of an equalizer, the error e(n) with a minimum value is found.

Therefore, in the two algorithms described above, in addition to the equalizer, an additional analog block, such as an algorithm processing unit 130, is required to receive an input signal x(n) and an error signal e(n), which is a difference between an output y(n) of the equalizer and d(n).

This additional block causes the characteristics of the EQ to degrade due to an increase in additional parasitic components in an input data line.

For reference, the EQ is essential to compensate for inter-symbol interference (ISI) caused by a channel between a transmitter (Tx) and a receiver (Rx) in a high speed serial interface.

However, since the channel between the Tx and the Rx is highly diverse and the channel environment to be used may not be known at the time of developing the Tx and the Rx, reliable communication is possible only when the Rx actively compensates for the ISI.

Therefore, for various channel environments, an adaptive EQ is required in the Rx. An embodiment of the present disclosure aims to implement such adaptive EQ operation without any additional circuitry in the analog block.

More specific embodiments related thereto will be described in more detail below with reference to FIG. 2 and the like.

FIG. 2 is a block diagram of the adaptive EQ according to an embodiment of the present disclosure.

To implement the present disclosure, an equalization unit 201 capable of controlling an equalization (EQ) gain is required in an analog block 200.

Furthermore, the analog block 200 requires a restoration unit 202 that restores data from which ISI jitter has been removed from the equalization unit 201. Here, the restoration unit 202 may be implemented, for example, as a clock and data recovery (CDR).

Furthermore, unlike the conventional technology, a digital logic block 210 confirms errors in the restored data and stores the number of errors corresponding to each EQ gain (value). Additionally, the digital logic block 210 performs the role of controlling the EQ gain value by confirming an error trend using the previous/current EQ gain value and the previous/current error value.

For example, the digital logic block 210 confirms the error occurrence trend (increase or decrease) by comparing the previous EQ gain value and the current EQ gain value, and the corresponding number of errors in the previous EQ gain value and the number of errors in the current EQ gain value.

When the error increases, it operates in the opposite direction, and when the error decreases, it operates in the corresponding decrease direction. Accordingly, the EQ gain value with the minimum error may be found.

In other words, to summarize, the equalization unit 201 receives input data from a transmitter via at least one channel and equalizes the received input data.

The restoration unit 202 restores the equalized input data.

The digital logic block 210 adjusts the EQ gain value of the restored input data. Here, the digital logic block 210 may be referred to as a controller in the present specification.

In particular, the equalization unit 201 equalizes the input data according to the EQ gain value received from the digital logic block 210 (e.g., controller).

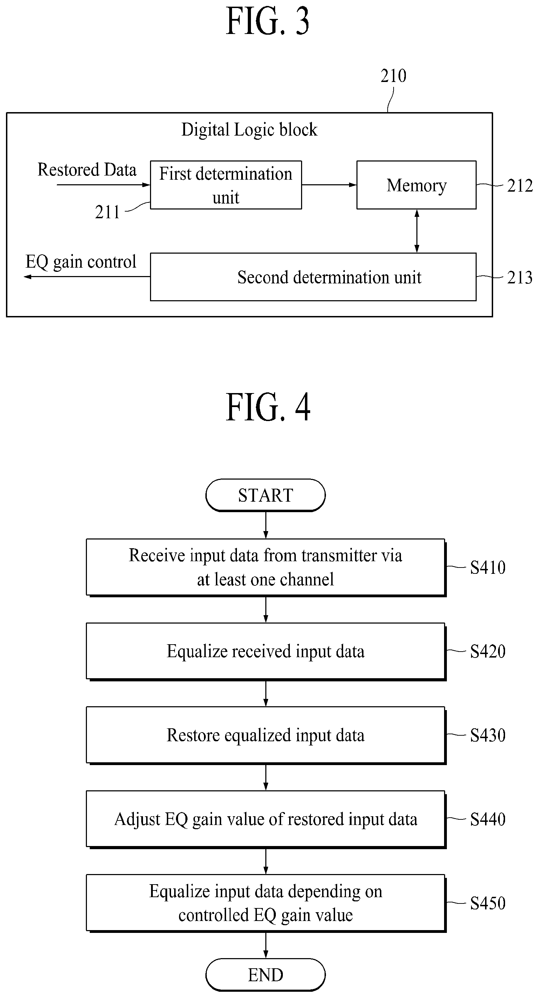

Meanwhile, more detailed components of the digital logic block 210 (e.g., controller) illustrated in FIG. 2 will be described below with reference to FIG. 3.

FIG. 3 is a block diagram illustrating the digital logic block shown in FIG. 2 in more detail.

As illustrated in FIG. 3, the digital logic block 210 (e.g., a controller) includes a first determination unit 211, a memory 212, and a second determination unit 213, etc.

The first determination unit 211 checks number of errors corresponding to the current EQ gain value of the restored input data. Here, the first determination unit 211 illustrated in FIG. 3 may be named an error checker.

The memory 212 stores the current EQ gain value and the corresponding number of errors. Here, the memory 212 illustrated in FIG. 3 may be named an error register.

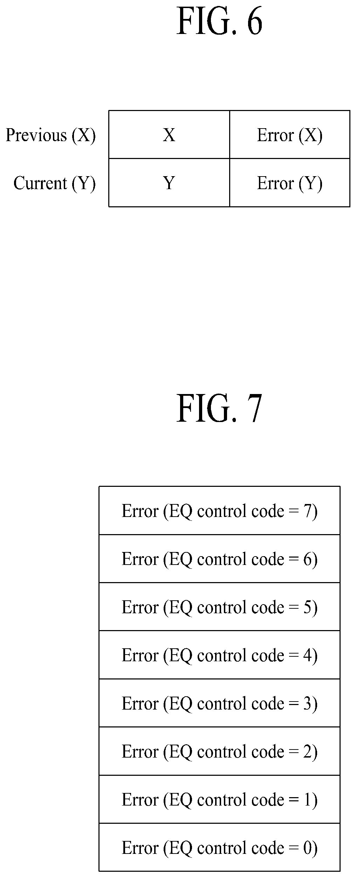

Meanwhile, an example of a data structure stored in the memory 212 will be described in more detail below with reference to FIGS. 6 and 7 and the like.

The second determination unit 213 compares the number of errors corresponding to the previous EQ gain value stored in the memory 212 with the number of errors corresponding to the current EQ gain value, and determines whether the number of errors has increased or decreased based on the comparison result. Here, the second determination unit 213 illustrated in FIG. 3 may be named an error trend checker.

When it is determined that the number of errors increases based on the determination result, the second determination unit 213 may output an EQ gain value smaller than the current EQ gain value to the equalization unit (number 201 illustrated in FIG. 2).

On the other hand, when it is determined that the number of errors decreases based on the determination result, the second determination unit 213 outputs an EQ gain value greater than the current EQ gain value to the equalization unit (number 201 illustrated in FIG. 2).

That is, as illustrated in FIGS. 2 and 3, according to an embodiment of the present disclosure, a method of finding an optimal EQ gain value by confirming errors in digital logic without any additional blocks in an analog block is implemented.

Therefore, there is a technical effect that no degradation in characteristics occurs in the EQ and the CDR within the analog block when implementing the adaptive EQ.

FIG. 4 is a flowchart illustrating a method of controlling a device according to an embodiment of the present disclosure. The operation illustrated in FIG. 4 may be performed, for example, within a receiver using a high speed serial interface. However, the sequence of operations illustrated in FIG. 4 is merely an example, and those skilled in the art may delete, add, or change the order of some steps.

First, the receiver using a high speed serial interface according to an embodiment of the present disclosure receives input data from a transmitter via at least one channel (S410).

Furthermore, the receiver using a high speed serial interface according to an embodiment of the present disclosure equalizes the received input data (S420).

Additionally, the receiver using a high speed serial interface according to an embodiment of the present disclosure restores the equalized input data (S430).

The receiver using a high speed serial interface according to an embodiment of the present disclosure may adjust the EQ gain value of the restored input data (S440).

Finally, the receiver using a high speed serial interface according to an embodiment of the present disclosure equalizes the input data depending on the EQ gain value adjusted in operation S440 (S450).

Meanwhile, although not illustrated in FIG. 4, various other embodiments may exist for operation S440.

For example, operation S440 further includes an operation of checking the number of errors corresponding to the current EQ gain value of the restored input data.

For example, operation S440 further includes an operation of storing the current EQ gain value and the corresponding number of errors in the memory.

For example, operation S440 may further include an operation of comparing the number of errors corresponding to the previous EQ gain value pre-stored in the memory with the number of errors corresponding to the current EQ gain value (the current EQ gain value is greater than the previous EQ gain value), and an operation of determining whether the number of errors increases or decreases based on the comparison result.

Operation S450 may further include an operation of controlling the equalization of the input data using the EQ gain value smaller than the current EQ gain value when it is determined that the number of errors increases based on the determination result.

On the other hand, operation S450 may further include an operation of controlling the equalization of the input data using the EQ gain value greater than the current EQ gain value when it is determined that the number of errors decreases based on the determination result.

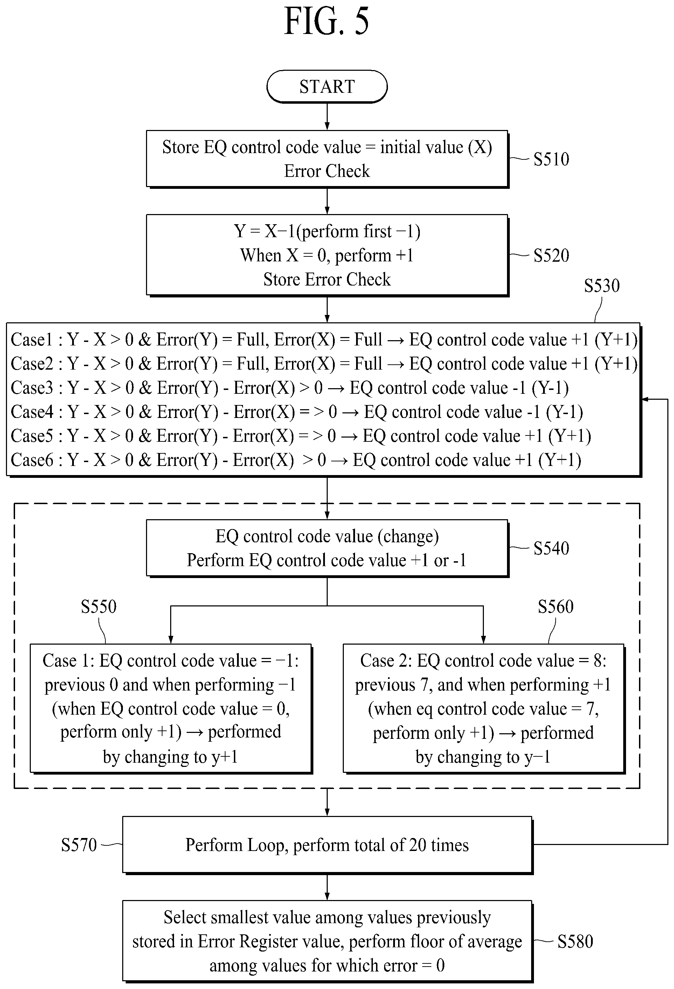

FIG. 5 is a flowchart illustrating the flowchart illustrated in FIG. 4 in more detail. FIG. 6 is a diagram illustrating an example of data stored in a memory of the device according to an embodiment of the present disclosure. FIG. 7 is a diagram illustrating another example of the data stored in the memory of the device according to an embodiment of the present disclosure.

The adaptive EQ operation of the receiver using a high speed serial interface according to an embodiment of the present disclosure may operate in the sequence illustrated in FIG. 5. Furthermore, a register for storing the number of errors corresponding to the EQ gain value is additionally required, and an example thereof is provided in FIGS. 6 and 7.

As illustrated in FIG. 5, the receiver using a high speed serial interface according to an embodiment of the present disclosure designates an initial value X as the EQ gain value and stores the corresponding number of errors in a register, etc., which is an example of memory, as illustrated in FIG. 6 (S510).

Furthermore, the receiver using a high speed serial interface according to an embodiment of the present disclosure sets Y to X-1. Here, Y represents the current EQ gain value (however, when X is 0, Y is set to X+1).

The number of errors corresponding to the current EQ gain value Y is stored in the register, etc., which is an example of memory, as illustrated in FIG. 6 (S520).

It is determined whether various conditions are satisfied (S530). For example, six cases will now be described.

As a first condition, when the condition Y-X > 0 is satisfied, error Y is in a full state, and error X is in a full state, 1 is added to an EQ control code value (Y+1).

The meaning of an error being in a full state as described in the specification and drawings refers, for example, to cases where a data error occurs that exceeds the limit of data that may be stored in memory. In this case, since it is impossible to determine whether the data error is large or small, the EQ control code is set to increase by +1 for exception handling.

As a second condition, when the condition Y-X < 0 is satisfied, the error Y is in the full state, and the error X is in the full state, 1 is added to the EQ control code value (Y+1).

As a third condition, when the condition Y-X > 0 is satisfied and the condition Error(Y)-Error(X) > 0 is satisfied, 1 is subtracted from the EQ control code value (Y-1).

As a fourth condition, when the condition Y-X < 0 is satisfied and the condition Error(Y)-Error(X) ≤ 0 is satisfied, 1 is subtracted from the EQ control code value (Y-1).

As a fifth condition, when the condition Y-X > 0 is satisfied and the condition Error(Y)-Error(X) = < 0 is satisfied, 1 is added to the EQ control code value (Y+1).

As a sixth condition, when the condition Y-X < 0 is satisfied and the condition Error(Y)-Error(X) > 0 is satisfied, 1 is added to the EQ control code value (Y+1).

Furthermore, the receiver using a high speed serial interface according to an embodiment of the present disclosure changes the EQ control code value (S540). For example, 1 is added to or 1 is subtracted from the EQ control code value.

Here, changing the EQ control code value means changing the EQ gain value, and to control the EQ gain value, the EQ control code value is changed to +1 or the EQ control code value is changed to -1.

More specifically, it means increasing or decreasing the EQ gain value, and the code value for controlling the EQ gain value is increased by +1 or decreased by -1.

Additionally, when the EQ control code value corresponds to -1 (i.e., the previous EQ control code value was 0 and -1 is performed), it is changed to Y+1 and performed (S550).

On the other hand, when the EQ control code value corresponds to 8 (i.e., the previous EQ control code value was 7 and +1 is performed), the EQ control code value is changed to Y-1 and performed (S560).

More specifically, when the previous EQ control code value is 0 and step S540 is currently being performed, if S540 is performed as -1, further operation becomes impossible because the EQ control code value is limited only to a range of 0 to 7. Accordingly, in this case, the design is configured to perform exception handling by increasing the EQ control code value by +1 instead of decreasing the EQ control code value by -1 in operation S540.

Similarly, when the previous EQ control code value was 7 and operation S540 is being performed, if S540 is performed as +1, the EQ control code value should become 8; however, since the EQ control code value is limited only to a range of 0 to 7, further operation becomes impossible in this case as well. Accordingly, in this case, the design is configured to perform exception handling by performing S540 as -1 instead of +1.

When the numbers of errors are all 0, the EQ control code value is repeatedly performed from 0 to 7.

Meanwhile, a loop from operation S530 to operation S560 is set to be performed a total of 20 times (S570), but the number may be changed.

Finally, among the values stored in the error register illustrated in FIG. 7, the smallest value is selected (S580).

The meaning of the average in operation S580 will be described in more detail.

First, when the loop is repeated 20 times, the smallest value among the error values stored in the memory is selected.

However, when there are multiple minimum values, an average value should be selected. Therefore, among the EQ control code values from 0 to 7, the average value is selected by averaging the EQ control code values that include the minimum error values.

It may be understood by those skilled in the art to which the present disclosure described above pertains that the present disclosure may be implemented in other specific forms without changing the spirit or essential feature thereof.

In addition, the methods described in the present specification may be implemented at least partially using one or more computer programs or components. These components may be provided as a series of computer instructions via a computer-readable or machine-readable medium including volatile and non-volatile memory. The instructions may be provided as software or firmware and may be implemented, wholly or partially, in a hardware configuration such as application specific integrated circuits (ASICs), field-programmable gate arrays (FPGAs), digital signal processors (DSPs), or other similar devices. The instructions may be configured to be executed by one or more processors or other hardware configurations, the processors or other hardware configurations capable of performing or being able to perform all or part of the methods and procedures disclosed herein when executing the series of computer instructions.

According to one embodiment of the present disclosure, in the process of implementing the adaptive EQ required for the high speed serial interface, the optimal EQ gain value can be found by checking the errors in the digital logic without any additional blocks in the analog block.

Therefore, no degradation in characteristics occurs in the EQ and the CDR within the analog block when implementing the adaptive EQ.

Generally, since the EQ and the CDR within the analog block are highly sensitive blocks, adding circuits for implementing the LMS algorithm or the RLS algorithm to realize adaptive EQ can change characteristics, thereby requiring a significant amount of circuit design and verification time.

On the other hand, according to one embodiment of the present disclosure, there is a technical effect of being able to implement the adaptive EQ only through the change in the digital logic without causing degradation in characteristics while maintaining compatibility with an existing developed analog block.

Furthermore, in addition to the effects of the present disclosure explicitly described herein, technical effects that can be inferred by those skilled in the art from the specification and drawings also fall within the scope of other rights of the present disclosure.

Therefore, it should be understood that the above-mentioned embodiments are not restrictive but are exemplary in all aspects. It should be interpreted that the scope of the present disclosure is defined by the following claims rather than the above-mentioned detailed description and all modifications or alterations deduced from the meaning, the scope, and equivalences of the claims are included in the scope of the present disclosure.

## Claims

1. A method of controlling a receiver using a high speed serial interface, comprising:
receiving input data from a transmitter via at least one channel;
equalizing the received input data;
restoring the equalized input data;
adjusting an equalization (EQ) gain value of the restored input data; and
re-equalizing the input data depending on the adjusted EQ gain value,
wherein the adjusting includes:
checking the number of errors corresponding to a current EQ gain value of the restored input data; and
adjusting the EQ gain value depending on the checked number of errors.

2. The method of claim 1, wherein the adjusting further includes storing the current EQ gain value and the corresponding number of errors in a memory.

3. The method of claim 2, wherein the adjusting further includes:
comparing the number of errors corresponding to a previous EQ gain value pre-stored in the memory with the number of errors corresponding to the current EQ gain value, the current EQ gain value being greater than or smaller than the previous EQ gain value; and
determining whether the number of errors increases or decreases based on a result of the comparison.

4. The method of claim 3, further comprising controlling equalization of the input data using an EQ gain value smaller than the current EQ gain value when it is determined that the number of errors increases based on a result of the determination.

5. The method of claim 4, further comprising controlling the equalization of the input data using an EQ gain value greater than the current EQ gain value when it is determined that the number of errors decreases based on the result of the determination.

6. The method of claim 5, wherein, as the equalizing, least mean squares (LMS) adaptive EQ or recursive least squares (RLS) adaptive EQ is used.

7. A receiver using a high speed serial interface, comprising:
an equalization unit configured to receive input data via at least one channel from a transmitter and equalize the received input data;
a restoration unit configured to restore the equalized input data; and
a controller configured to check the number of errors corresponding to a current equalization (EQ) gain value of the restored input data and adjust an EQ gain value depending on the checked number of errors,
wherein the equalization unit equalizes the input data depending on the EQ gain value received from the controller.

8. The receiver of claim 7, wherein the controller further includes a memory that stores the current EQ gain value and the corresponding number of errors.

9. The receiver of claim 8, wherein the controller further includes a determination unit configured to:
compare the number of errors corresponding to a previous EQ gain value pre-stored in the memory with the number of errors corresponding to the current EQ gain value; and
determine whether the number of errors increases or decreases based on a result of the comparison.

10. The receiver of claim 9, wherein, when it is determined that the number of errors increases based on a result of the determination, the determination unit outputs an EQ gain value smaller than the current EQ gain value to the equalization unit.

11. The receiver of claim 10, wherein, when it is determined that the number of errors decreases based on the result of the determination, the determination unit outputs an EQ gain value greater than the current EQ gain value to the equalization unit.

12. The receiver of claim 11, wherein, as the eqaulizing, least mean squares (LMS) adaptive EQ or recursive least squares (RLS) adaptive EQ is used.
